# EUROPEAN PATENT APPLICATION

(11) **EP 2 650 772 A2**
(43) Date of publication of application: **16.10.2013**
(21) Application number: 12197546.0
(22) Date of filing: 17.12.2012
(51) Int. Cl.: G06F 3/06

(54) **Devices, system and methods of USB network storage**

(30) Priority: 13.04.2012 TW 101113132
(71) Applicant: Acer Incorporated, Taipei Hsien 221 (TW)
(72) Inventor: Yeh, Yu-Pin, Taipei Hsien 221 (TW)
(74) Representative: Michalski Hüttermann & Partner Patentanwälte

(57) **Abstract**

A USB network storage device, having a unique identification code is provided. The USB network storage device has a unique identification code, and comprises: a USB interface and a transformation unit. The network communication unit accesses network storage media information from a remote server by a network communication protocol, when the USB interface is connected to an external computer device. The transformation unit transforms the network storage information into USB storage information, and the remote server determines the network storage information according to the unique identification code, and the external computer device obtains the USB storage information via the USB interface by a USB communication protocol.

## Description

### CROSS REFERENCE TO RELATED APPLICATIONS

This Application claims priority of Taiwan Patent Application No. 101113132, filed on April. 13, 2012, the entirety of which is incorporated by reference herein.

### BACKGROUND OF THE INVENTION

### Field of the Invention

The disclosure relates generally to USB storage devices and methods, and more particularly, relates to USB storage devices and methods of accessing cloud storage.

### Description of the Related Art

Popularized since 1994, the Universal Serial Bus (USB) specification allows plug and play, and does not need to perform complex steps for connection and removal from compatible devices. The USB interface has become a convenient interface for electronic data file access. USB storage devices, such as a USB flash drive, have the advantages of small sizes, large memory capacities, and portability for data storage. Therefore, USB storage devices have become one of the main devices for storing electronic data.

Nowadays, USB storage devices are widely used. Users can store a file to a USB storage device, and can access the file in the USB storage device by any electronic device with a USB port. With technology improving, the size of electronic information and data has increased, and users are requiring larger memory capacities. However, capacities of the traditional USB storage device do not have scalability, so that it can not change as user needs change. Therefore, a USB storage device with adjustable memory capacity and convenience for user access with various electronic devices is needed.

### BRIEF SUMMARY OF THE INVENTION

A USB network storage device, having a unique identification code is provided. The USB network storage device comprises: a USB interface; a network communication unit, wherein when the USB interface is connected to an external computer device, the network communication unit accesses network storage media information from a remote server by a network communication protocol; and a transformation unit, transforming the network storage media information into USB storage media information, wherein the remote server determines the network storage media information according to the unique identification code, and the external computer device obtains the USB storage media information via the USB interface according to a USB communication protocol.

A USB network storage system is provided. The USB network storage system comprises: a computer device, obtaining USB control information via the USB communication protocol; a remote server, having a memory, and outputting network storage media information of the memory according to a unique identification code; a USB network storage device, having the unique identification code, transmitting the unique identification code to the remote server when the USB network storage device is connected to the computer device, obtaining the network storage media information by a network communication protocol, and transforming the network storage media information into USB storage media information.

A USB network storage method, for a USB network storage device having a unique identification code, is provided. The USB network storage method comprises: transmitting the unique identification code to a remote server by the USB network storage device when the USB network storage device is connected to an external computer device; providing network storage media information of a memory to the USB network storage device by the remote server according to the unique identification code; transforming the network storage media information into USB storage media information by the USB network storage device; and transmitting the USB storage media information to the external computer device.

### BRIEF DESCRIPTION OF DRAWINGS

The invention will become more fully understood by referring to the following detailed description with reference to the accompanying drawings, wherein:

Fig. 1 is a block diagram illustrating an embodiment of a USB network storage system;

Fig. 2 is a flowchart of an embodiment of a method for the USB network storage system shown in Fig. 1 according to the invention; and

Fig. 3 is a flowchart of another embodiment of a method for the USB network storage system shown in Fig. 1 according to the invention.

### DETAILED DESCRIPTION OF THE INVENTION

The making and using of the embodiments of the present invention are discussed in detail below. It should be appreciated, however, that the embodiments provide many applicable inventive concepts that can be embodied in a wide variety of specific contexts. The specific embodiments discussed are merely illustrative of specific ways to make and use the invention, and do not limit the scope of the invention.

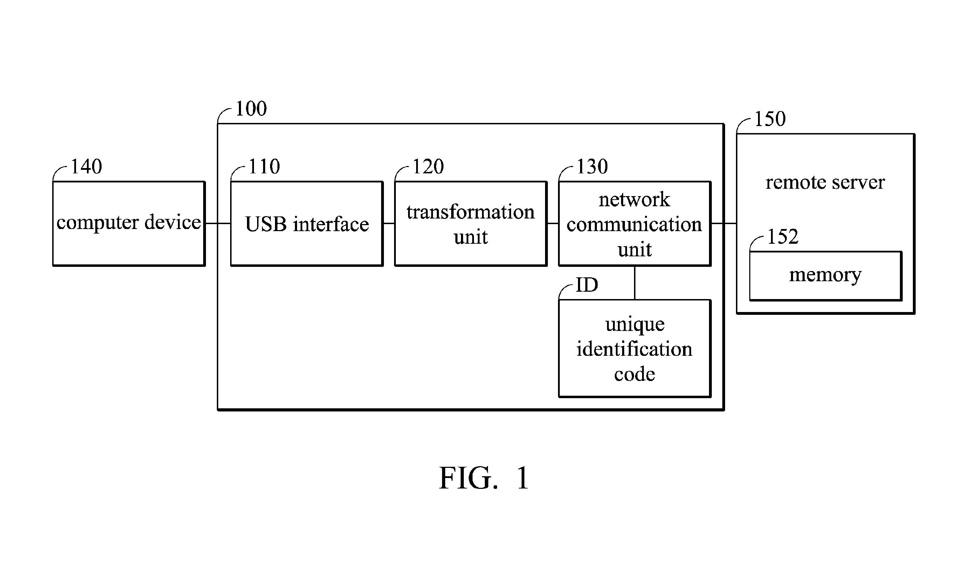

Fig. 1 is a block diagram illustrating an embodiment of a USB network storage system. In an embodiment of the present invention, the USB network storage system comprises a USB network storage device 100, a computer device 140, and a remote server 150. The USB network storage device 100 comprises a USB interface 110, a transformation unit 120, a network communication unit 130, and a unique identification code ID. In some embodiments, the USB interface 110 is used for connection to the computer device 140, and communication and data transmission by USB communication protocol. The network communication unit 130 is used for communication with the remote server 150. The network communication protocol between the network communication unit 130 and the remote server 150 can be Transmission Control Protocol/Internet Protocol (PCT/IP), or HyperText Transfer Protocol (HTTP) based on PCT/IP, or Secure Sockets Layer (SSL) based on PCT/IP, or any combination thereof. Also, the network communication unit 130 and the remote server 150 can communicate by a wireless network or a wired network. The transformation unit 120 transmits information between the USB communication protocol and the network communication protocol as a bridge.

In some embodiments of the present invention, when the USB interface 110 is connected to the computer device 140, the network communication unit 130 transmits a request signal with the unique identification code ID to the remote server 150. When the remote server 150 receives the request signal, the remote server 150 obtains a memory 152 corresponding to the unique identification code and provides network storage media information of the memory 152 to the network communication unit 130 of the USB network storage device 100. In some embodiments, the network storage media information can be some information about the capacity, remaining space, or stored file data of the memory 152. The network communication unit 130 transmits the network storage media information to the transformation unit 120, and the transformation unit 120 transforms the network storage media information into USB storage media information, such that the transformation unit 120 can provide USB storage media information to the computer device 140 via the USB interface. The USB network storage device 100 transforms the network storage media information received by the network communication unit 130 into the USB storage media information, and the computer device 140 communicates with the USB network storage device 100 via the USB communication protocol, so that the computer device 140 identifies the USB network storage device 100 as a normal USB storage device. In another embodiment, the network communication unit 130 can transmit the request signal with the unique identification code ID to the remote server 150 for identification and data access, only when the computer device 140 is attempting to access data.

In some embodiments, when the computer device 140 is attempting to access specific data of the memory 152 of the remote server, the computer device 140 generates USB control information by the USB communication protocol, and transmits the USB control information to the transformation unit 120 via the USB interface 110. The transformation unit 120 transforms the USB control information into network storage media control information, and then the network communication unit 130 transmits the network storage media control information to the remote server 150 by the network communication protocol. Therefore, the remote server 150 can perform the operation requested by the computer device 140 to control the memory 152 according to the network storage media control information. For example, when the operation of the network storage media control information is data accessing, the remote server 150 obtains the specific data as network storage media information according to the unique identification code ID and the network storage media control information, and the remote server 150 transmits the network storage media information to the network communication unit 130 of the USB network storage device 100. After, the following steps are similar to the steps of accessing the network storage media information described above. The network communication unit 130 transmits the network storage media information to the transformation unit 120, and the transformation unit 120 transforms the network storage media information into USB storage media information, such that the transformation unit 120 can provide USB storage media information to the computer device 140 via the USB interface. Note that, when the computer device 140 accesses the USB network storage device 100, the accessed data actually provided by the remote server 150, and the accessed data is transformed into USB storage media information by the transformation unit 120. Therefore, the computer device 140 can use the common USB storage media access method to access the data of the memory 152 of the remote 150 according to the network storage media information transformed by the USB network storage device 100.

In another embodiment of the present invention, when the computer device 140 is attempting to delete specific data of the memory 152 of the remote server, the computer device 140 generates USB control information by the USB communication protocol accordingly, and transmits the USB control information to the transformation unit 120 via the USB interface 110. The transformation unit 120 transforms the USB control information into network storage media control information, and then the network communication unit 130 transmits the network storage media control information to the remote server 150 by the network communication protocol. The remote server 150 is capable of identifying that the control operation corresponds to deleting of the specific data by determining the network storage media control information, and the remote server 150 can delete the specific data of memory 152 according to the unique identification code ID and the network storage media control information.

It should be noted, in the above embodiment of data deleting, that the computer device 140 does not request to access the specific data of the memory 152, but the remote server 150 still transmits the network storage media information to the network communication unit 130 of the USB network storage device 100, wherein the network storage media information would indicate that the data has been deleted or the data has been removed. The network communication unit 130 transmits the network storage media information to the transformation unit 120, and the transformation unit 120 transforms the network storage media information into the USB storage media information, such that the transformation unit 120 can provide USB storage media information to the computer device 140 via the USB interface 110. Accordingly, the computer device 140 can identify that the specific data has been deleted or the data has been removed, so that the computer device 140 can identify that the state of the memory 140 in real time.

It should be note that, when the computer device 140 accesses the USB network storage device 100, the accessed data actually is provided by the memory 152 of the remote server 150, and the transformation unit 120 transforms the corresponding operation and management information into USB storage media information which is provided to the computer device 140. Therefore, the computer device 140 can use the common USB storage media access method to access or control the data of the memory 152 of the remote 150 via the USB network storage device 100. Note that while the embodiments described above disclose methods for data accessing and data deleting, the invention is not limited thereto. One of ordinary skill in the art can utilize other operations as processes performed to the memory 152 of the remote server 150 based on the disclosure of the invention. For example, when the computer device 140 is attempting to store specific data to the memory 152 of the remote server 150, the computer device 140 may generate USB control information including the specific data, and the transformation unit 120 transforms the USB control information into network storage media control information. Finally, the memory 152 of the remote server 150 can store the specific data accordingly.

In some embodiments of the present invention, the remote server 150 may comprise more memories, and each memory would correspond to different unique identification codes, respectively. Therefore, when the remote server 150 receives a unique identification code, the remote server 150 provides the corresponding memory according to the unique identification code. Because the remote server 150 identifies the memory 152 and the network storage media information according to the unique identification code of the USB network storage device 100, only the computer connected to the USB network storage device 100 can access the corresponding data of the remote server 150. Therefore, user data is safely stored, and users may have the option of adjustable memory capacity.

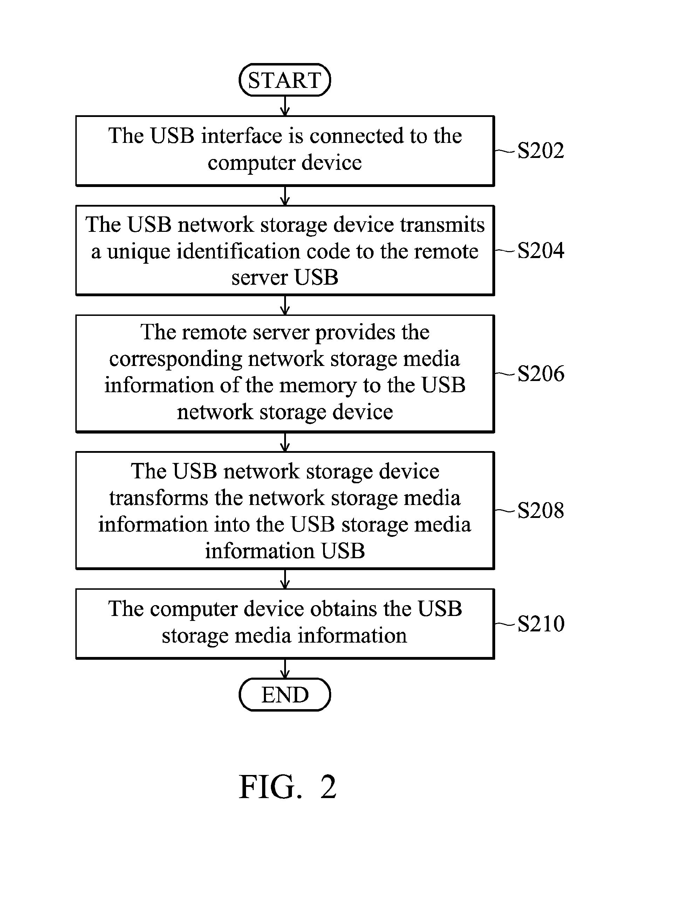

Fig. 2 is a flowchart of an embodiment of a method for the USB network storage system shown in Fig. 1 according to the invention. In step S202, the USB interface is connected to the computer device 140. In step S204, the network communication unit 130 transmits a request signal having a unique identification code ID to the remote server 150. In step S206, the remote server 150 identifies the corresponding memory 152 according to the unique identification code ID, and provides the network storage media information corresponding to the memory 152 to the network communication unit 130 of the USB network storage device 100.

Next, in step S208, the network communication unit 130 transmits the network storage media information to the transformation unit 120, and the transformation unit 120 transforms the network storage media information into the USB storage media information. Finally, in step S210, the computer device 140 obtains the USB storage media information via the USB interface 110. Therefore, the computer device 140 can manage/control the data in remote server under the original architecture of USB interface.

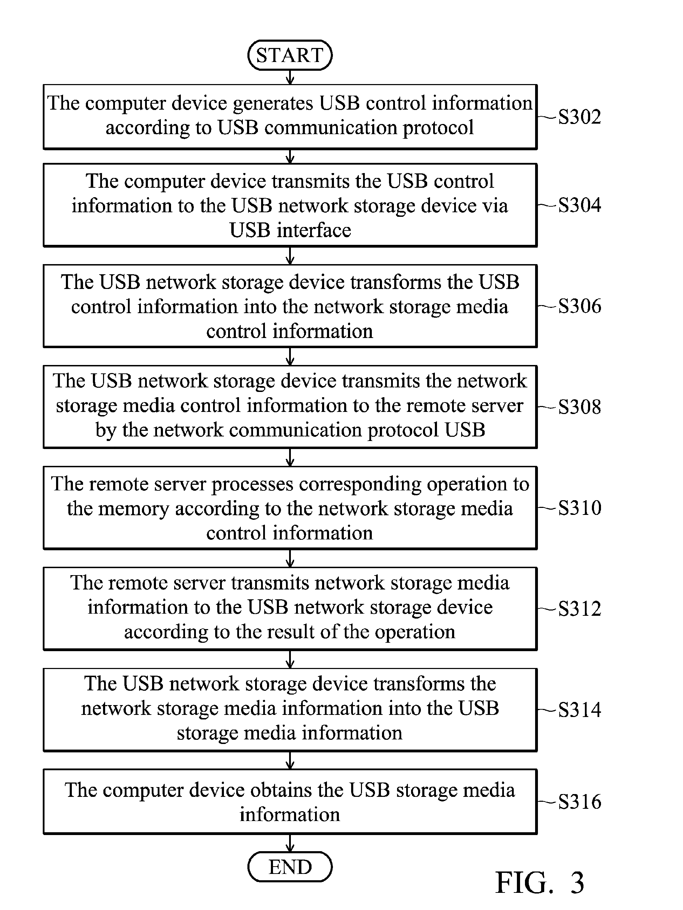

Fig. 3 is a flowchart of another embodiment of a method for the USB network storage system shown in Fig. 1 according to the invention. In step S302, the computer device 140 generates USB control information according to USB communication protocol. In step S304, the computer device 140 transmits the USB control information to the transformation unit 120. In step S306, the transformation unit 120 transforms the USB control information into the network storage media control information. Next, in step S308, the network communication unit 130 transmits the network storage media control information to the remote server 150 by the network communication protocol. In step S310, the remote server 150 performs corresponding operations, such as delete, copy, or move, etc., to the memory 152 corresponding to the unique identification code ID according to the network storage media control information. In step S312, when the corresponding operations are finished, the remote server 150 transmits network storage media information related to the memory 152 to the network communication unit 130 of the USB network storage device 100 according to the results of the performed operation.

Next, in step S314, the network communication unit 130 transmits network storage media information to the transformation unit 120, and the transformation unit 120 transforms the network storage media information into the USB storage media information. Finally, in step S316, the computer device 140 obtains the USB storage media information via the USB interface 110. Therefore, the computer device 140 can identify the state of the memory 140 in real time.

In some embodiments, when the computer device 140 stores a specific data to the memory 152 of the remote server 150, the computer device 140 may also transmits the specific data to the remote server 150 as USB control information via the USB network storage device 100.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A USB network storage device, having a unique identification code, comprising:
a USB interface;
a network communication unit, wherein when the USB interface is connected to an external computer device, the network communication unit accesses network storage media information from a remote server by a network communication protocol; and
a transformation unit, transforming the network storage media information into USB storage media information,
wherein the remote server determines the network storage media information according to the unique identification code, and the external computer device obtains the USB storage media information via the USB interface according to a USB communication protocol.

2. The USB network storage device of claim 1, wherein the external computer device transmits USB control information to the transformation unit via the USB communication protocol, and when the transformation unit receives the USB control information, the transformation unit transforms the USB control information into network storage media control information, and the network communication unit transmits the network storage media control information to the remote server by the network communication protocol.

3. The USB network storage device of claim 2, wherein the remote server has a memory corresponding to the unique identification code, and when the remote server receives the network storage media control information, and the remote server performs an operation corresponding to the USB control information based on the network storage media control information and the unique identification code, wherein the remote server generates the USB storage media information according to a result of the performed operation.

4. A USB network storage system, comprising:
a computer device, obtaining USB control information by the USB communication protocol;
a remote server, having a memory, and outputting network storage media information of the memory according to a unique identification code;
a USB network storage device, having the unique identification code, transmitting the unique identification code to the remote server when the USB network storage device is connected to the computer device, obtaining the network storage media information by a network communication protocol, and transforming the network storage media information into USB storage media information.

5. The USB network storage system of claim 4, wherein the external computer device transmits USB control information to the USB network storage device by the USB communication protocol, and the USB network storage device transmits network storage media control information to the remote server according to the received USB control information, and the remote server performs an operation corresponding to the USB control information based on the network storage media control information and the unique identification code, wherein the remote server generates the USB storage media information according to a result of the performed operation.

6. A USB network storage method, for a USB network storage device having a unique identification code, comprising:
transmitting the unique identification code to a remote server by the USB network storage device when the USB network storage device is connected to an external computer device;
providing network storage media information of a memory to the USB network storage device by the remote server according to the unique identification code;
transforming the network storage media information into USB storage media information by the USB network storage device; and
transmitting the USB storage media information to the external computer device.

7. The USB network storage method of claim 6, further comprising:
using the remote server to transmit the USB storage media information to the USB network storage device by the USB communication protocol; and
using the USB network storage device to transmit the USB storage media information to the external computer device by the USB communication protocol.

8. The USB network storage method of claim 6, further comprising:
using the external computer device to transmit USB control information to the USB network storage device via the USB communication protocol;
using the USB network storage device to transform the USB control information into network storage media control information;
transmitting the network storage media control information to the remote server; and
using the remote server to perform an operation corresponding to the USB control information based on the network storage media control information and the unique identification code, wherein the remote server generates the USB storage media information according to a result of the performed operation.
